(19) Europäisches Patentamt / European Patent Office / Office européen des brevets

(11) **EP 1 045 500 B1**

(12) **FASCICULE DE BREVET EUROPEEN**

(45) Date de publication et mention de la délivrance du brevet:
**17.02.2016   Bulletin 2016/07**

(51) Int Cl.:
*H02H 3/08* *(2006.01)*   *H02H 1/00* *(2006.01)*

(21) Numéro de dépôt: **00410020.2**

(22) Date de dépôt: **06.03.2000**

(54) **Déclencheur électronique à reconstitution de phase et disjoncteur comportant un tel déclencheur**

Elektronischer Auslöser mit Phasewiederherstellung und Lastschalter mit einem solchen Auslöser versehen

Electronic tripping device with phase reconstruction and circuit breaker with such a trip device

(84) Etats contractants désignés:
**DE ES FR GB IT**

(30) Priorité:   **14.04.1999   FR 9904848**

(43) Date de publication de la demande:
**18.10.2000   Bulletin 2000/42**

(73) Titulaire: **Schneider Electric Industries SAS**
**92500 Rueil-Malmaison (FR)**

(72) Inventeur: **Boudaud, Dominique,**
**Schneider Electric Ind. SA**
**38050 Grenoble cedex 09 (FR)**

(74) Mandataire: **Tripodi, Paul et al**
**Schneider Electric Industries SAS**
**Service Propriété Industrielle**
**World Trade Center / 38EE1**
**5 Place Robert Schuman**
**38050 Grenoble Cedex 09 (FR)**

(56) Documents cités:
**US-A- 5 777 835   US-A- 5 815 357**

**Description**

L'invention concerne un déclencheur à reconstitution de phase comportant :

- au moins deux capteurs disposés sur des conducteurs principaux à protéger, et
- une unité de traitement comportant des moyens de traitement des signaux de courant connectés aux capteurs, des moyens de reconstitution de phase recevant des signaux représentatifs des signaux de courant fournis par les capteurs, et des moyens de traitement de fonction de déclenchement connectés aux moyens de traitement des signaux de courant et aux moyens de reconstitution. L'invention concerne aussi un disjoncteur comportant un tel déclencheur.

Les déclencheurs à reconstitution de phase comportent généralement deux capteurs disposés sur deux conducteurs principaux de phase et reconstituent un signal représentatif de la troisième phase lorsque le réseau est en triphasé. Chaque capteur peut aussi entourer deux conducteurs principaux, ainsi la mesure du courant sera représentative de la somme de deux courants de phase. Ces types de déclencheurs sont décrits notamment dans les brevets US 5,777,835 et US 5,815,357.

Pour la reconstitution d'une phase qui n'est pas mesurée, des moyens d'échantillonnage fournissent, à intervalles réguliers, des échantillons de signal de courant. Puis, des moyens de traitement comportant un microprocesseur calculent point par point le signal de phase manquant.

Dans ce mode de traitement, le calcul de la phase reconstituée risque de ne pas être suffisamment précis. En effet, les capteurs de courant, tels que des transformateurs de courant à circuit magnétique, comportent des réponses non linéaires. La non-linéarité des réponses est due notamment à la saturation des circuits magnétiques à forts courants.

Ainsi, dès que les courants dans les conducteurs principaux augmentent, la reconstitution point par point devient imprécise.

L'invention a pour but un déclencheur électronique à reconstitution de phase permettant une précision de la reconstitution sur une large plage de mesure.

Dans un déclencheur selon l'invention, les moyens de reconstitution de phase comportent :

- des premiers moyens de détermination pour déterminer des signaux représentatifs des amplitudes des signaux de courant fournis par les deux capteurs,
- des seconds moyens de détermination pour déterminer un signal représentatif d'un déphasage entre des signaux représentatif des signaux fournis par les deux capteurs, et
- des troisièmes moyens de détermination connectés aux premiers et seconds moyens de détermination pour déterminer un signal représentatif d'un courant de phase reconstitué en fonction des signaux représentatifs des amplitudes et du signal représentatif d'un déphasage des signaux fournis par les deux capteurs.

Dans un mode de réalisation préférentiel, les seconds moyens de détermination comportent des moyens pour calculer le cosinus du déphasage entre les signaux représentatifs des signaux fournis par les deux capteurs.

De préférence, les seconds moyens de détermination comportent des moyens pour déterminer des instants de passages à zéro dans un sens prédéterminé des signaux fournis par les capteurs de courant, lesdits instants étant un premier instant de passage à zéro d'un premier signal, un second instant de passage à zéro d'un second signal et un troisième instant de passage à zéro successif du premier signal, un signal représentatif du déphasage étant proportionnel au rapport d'un temps entre les premier et second instants sur un temps entre les premier et troisième instants correspondant à la période du premier signal.

Dans un mode de réalisation préférentiel, les troisièmes moyens de détermination comportent des premiers moyens de calcul d'un signal de produit pour calculer le produit des signaux représentatifs des amplitudes et du signal représentatif d'un déphasage.

Avantageusement, les troisièmes moyens de détermination comportent des seconds moyens de calcul d'un signal de somme pour calculer la somme des signaux d'amplitude élevés au carré et du signal de produit.

De préférence, le déclencheur comporte des moyens de détermination de courant homopolaire comportant un capteur de courant disposé sur l'ensemble des conducteurs principaux.

Dans un mode de réalisation particulier, les moyens de reconstitution utilisent le signal fourni par les troisièmes moyens de détermination lorsqu'au moins un des signaux de courant fournis par les deux capteurs dépasse un premier seuil prédéterminé.

Avantageusement, chaque capteur de courant entoure deux conducteurs principaux.

Dans un mode de réalisation tétrapolaire le déclencheur comporte au moins trois capteurs disposés sur des conducteurs principaux à protéger, les premiers moyens de détermination déterminant des signaux représentatifs des amplitudes des signaux de courant fournis par les capteurs, et les troisièmes moyens de détermination connectés aux premiers et seconds moyens de détermination déterminant un signal représentatif d'un courant de phase reconstitué en fonction des signaux représentatifs des amplitudes, du signal représentatif d'un déphasage des signaux fournis par deux capteurs, et d'un signal fourni par un troisième capteur.

Un disjoncteur selon un mode réalisation de l'invention comporte au moins trois contacts connectés en série avec des conducteurs principaux et un déclencheur ayant les caractéristiques définies ci-dessus.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

- la figure 1 représente le schéma d'un déclencheur à reconstitution de type connu ;

- la figure 2 représente le schéma d'un déclencheur à reconstitution selon un mode de réalisation de l'invention ;

- la figure 3 illustre des signaux en sortie de deux capteurs de courant et un mode de détection de déphasage.

- la figure 4 montre une courbe de déclenchement d'un déclencheur selon un mode de réalisation de l'invention ayant au moins deux zones de reconstitution ;

- la figure 5 montre un organigramme de fonctionnement d'un déclencheur à reconstitution de phase selon un mode de réalisation de l'invention ;

- les figures 6 et 7 montrent d'autres modes de réalisation d'un déclencheur selon l'invention pour un disjoncteur comportant quatre pôles.

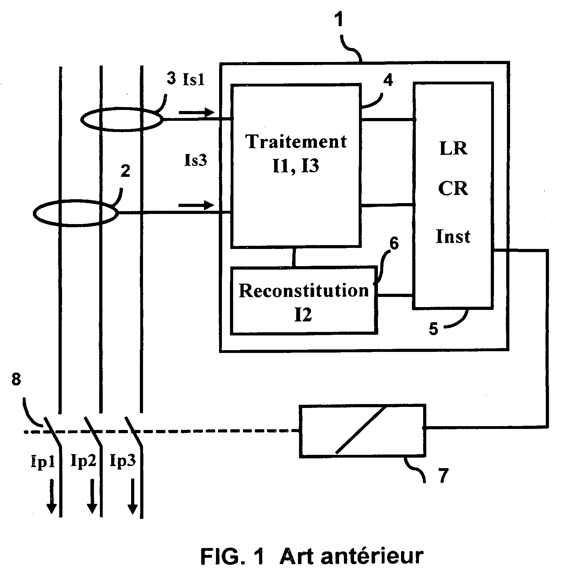

Le déclencheur électronique de la figure 1 comporte une unité de traitement 1 connectée à deux capteurs de courant 2 et 3 pour recevoir des signaux Is1 et Is3 représentatifs de courants Ip1, Ip2 et Ip3 circulant dans des conducteurs 36 à protéger.

Les signaux Is1 et Is3 sont appliqués à l'entrée d'un circuit 4 de traitement de signaux de courant. Le circuit de traitement 4 fournit, à un circuit de traitement 5 des fonctions de déclenchement, des signaux représentatifs des courants mesurés et traités par le circuit 4.

Un circuit de reconstitution 6 connecté aux circuits de traitement 4 et 5 reçoit des signaux représentatifs des courants mesurés et fournit un signal représentatif de la phase reconstituée. Ainsi, dans le dispositif de la figure 1, le circuit de traitement 5 reçoit des signaux représentatifs des courants des trois phases circulant dans les conducteurs à protéger.

Le circuit de traitement 5 effectue les fonctions de déclenchement et fournit un signal de déclenchement à un relais 7 lorsque des signaux de courant qu'il reçoit dépassent des seuils pendant des durées prédéterminées. Les fonctions de déclenchement sont notamment, les fonctions long retard, court retard et instantané. Le relais commande alors l'ouverture de contacts 8 à travers un mécanisme d'ouverture.

Les capteurs de courant 2 ou 3 comportent généralement un circuit magnétique qui provoque une réponse non linéaire. Par exemple, un transformateur de courant subit une saturation lorsque le courant circulant dans un conducteur primaire 36 augmente. Dans ce cas, une reconstitution point par point, à chaque échantillon de courant risque de donner un signal de reconstitution de phase erroné.

Un déclencheur selon un mode de réalisation de l'invention a des moyens de reconstitution améliorés qui évitent ou limitent des erreurs de reconstitution lorsque les signaux de courant sont déformés.

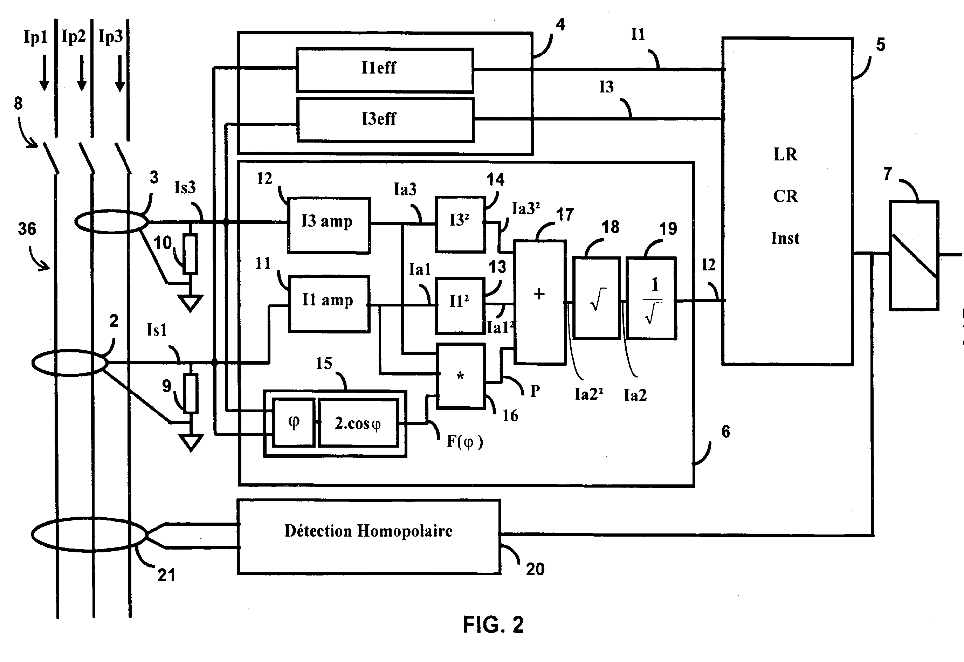

La figure 2 montre un déclencheur selon un mode de réalisation de l'invention. Les capteurs 2 et 3 sont disposés chacun sur un conducteur primaire principal 36 pour mesurer dans ce schéma, le courant de la phase 1 et celui de la phase 3. Ces capteurs 2 et 3 sont notamment des transformateurs de courant dont l'enroulement secondaire fournit un courant qui circule dans une résistance de mesure respectivement 9 et 10.

Des signaux Is1 et Is3 représentatifs des courants Ip1 et Ip3 sont appliqués au circuit de traitement 4 qui détermine par exemple des valeurs efficaces I1 et I3 desdits signaux de courant.

Dans le mode de réalisation de la figure 2, le circuit de reconstitution reçoit les signaux Is1 et Is3 et fournit un signal I2 reconstitué.

Les signaux Is1 et Is3 sont appliqués à des modules 11 et 12 qui déterminent des signaux d'amplitude Ia1 et Ia3 représentatifs des signaux Is1 et Is3 respectivement. Par exemple, les signaux Ia1 et Ia3 peuvent être détectés par un des détecteurs de crête. Une réponse de capteurs tels que des transformateurs de courant est plus linéaire et moins sensible à des déformations que des réponses en valeurs instantanées ou en valeurs efficaces.

Dans d'autres modes de réalisation de l'invention, les valeurs des amplitudes Ia1 et Ia3 peuvent aussi être déterminées à partir des valeurs efficaces I1 et I3 fournies par le circuit 4, par exemple en effectuant une racine carrée desdites valeurs. Il est également possible de déterminer Ia1 et Ia3 en effectuant des filtrages ou des transformées de Fourier des signaux Is1 et Is3.

Les signaux Ia1 et Ia3 sont appliqués à des modules 13 et 14 qui déterminent des carrés $Ia1^2$ et $Ia3^2$ des signaux d'amplitude Ia1 et Ia3.

Le circuit de reconstitution 6 comporte un module 15 recevant des signaux représentatifs des signaux Is1 et Is3 pour déterminer un signal $F(\varphi)$ en fonction du déphasage entre lesdits signaux Is1 et Is3.

De préférence, le module 15 détermine un signal de déphasage $\varphi$ entre les signaux Is1 et Is3 puis le cosinus du signal de déphasage $\varphi$. La valeur du cosinus peut être multipliée par un facteur deux.

Les signaux d'amplitude Ia1, Ia3 et le signal $F(\varphi)$ sont fournis à un module 16 qui effectue le produit desdits signaux.

Le module 16 fournit un signal P représentatif du produit des signaux d'amplitude Ia1 et Ia3 et du signal $F(\varphi)$.

Ensuite, un module 17 sommateur effectue la somme des signaux d'amplitude élevée au carrée $Ia1^2$ et $Ia3^2$ et du signal P de produit. Ainsi, le module 17 fournit un signal $Ia2^2$ représentatif de l'amplitude de la phase reconstituée élevée au carré.

Le signal $Ia2^2$ est appliqué à un module 18 qui effectue le calcul de la racine carrée Ia2 dudit signal $Ia2^2$ Puis, un module 19 détermine la valeur efficace I2 du signal reconstitué représentatif du courant Ip 2 de la phase reconstituée.

Les signaux I1, I3 fournis par le circuit 4 et le signal I2 reconstitué sont appliqués au circuit de traitement 5 des fonctions de déclenchement.

Les équations suivantes représentent des signaux déterminés par un circuit de reconstitution dans un mode particulier de réalisation de l'invention tel que celui représenté sur la figure 2.

Une équation (1) représente le signal $F(\varphi)$ dépendant du signal de déphasage.

$$F(\varphi) = 2 * \cos(\varphi) \qquad (1)$$

Une équation (2) représente le signal P représentatif du produit des signaux $Ia1^2$, $Ia3^2$ et $F(\varphi)$.

$$P = 2 * Ia1 * Ia3 * \cos(\varphi) \qquad (2)$$

Une équation (3) représente le signal $Ia2^2$ reconstituant la valeur de l'amplitude au carré du courant de phase reconstitué.

$$Ia2^2 = Ia1^2 + Ia3^2 + (2 * Ia1 * Ia3 * \cos(\varphi)) \qquad (3)$$

Une équation (4) représente le signal Ia2 de l'amplitude du courant de phase reconstitué.

$$Ia2 = \sqrt{Ia1^2 + Ia3^2 + 2 * Ia1 * Ia3 * \cos(\varphi)} \qquad (4)$$

Une équation (5) représente le signal I2 représentatif du courant efficace de la phase reconstituée.

$$I2 = \frac{1}{\sqrt{2}} * \sqrt{Ia1^2 + Ia3^2 + (2 * Ia1 * Ia3 * \cos(\varphi))} \qquad (5)$$

Avantageusement, un dispositif 20 de détection de courant homopolaire permet de vérifier si la somme vectorielle des courants primaires Ip1, Ip2 et Ip3 est sensiblement nulle. En effet, dans le mode de réalisation de la figure 2, si un courant Ip2 circule dans le circuit sans revenir par Ip1 ou Ip3, il ne sera pas reconstitué.

Le circuit de détection 20 connecté à un capteur de courant homopolaire 21 permet donc une protection des circuits électriques même si un seul courant circule dans la phase qui n'est pas mesurée.

Le dispositif 20 peut commander directement le relais 7 lorsqu'un signal représentatif d'un courant homopolaire dépasse un seuil prédéterminé. Il est possible aussi d'intégrer le dispositif 20 à un dispositif spécialisé pour des fonctions de déclenchement en protection terre ou homopolaire.

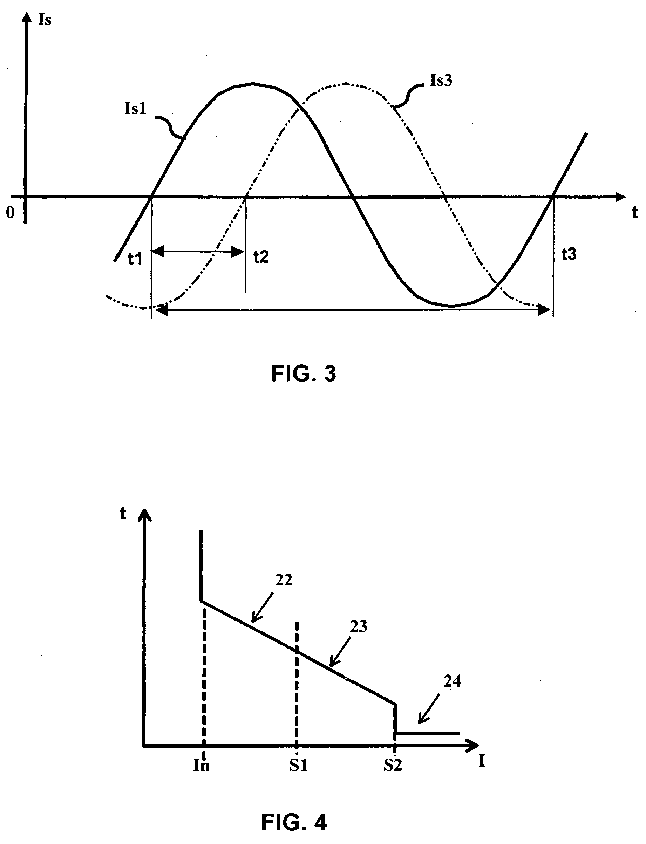

La figure 3 montre des signaux Is1 et Is3 et un mode de détection du déphasage entre lesdits signaux. Par exemple, à un instant t1, le signal Is1 passe au dessus de zéro de manière croissante. Puis, à un instant t2 le signal Is3 passe au dessus de zéro de manière croissante. Ensuite, à un instant t3 le signal Is1 passe de nouveau au dessus de zéro de manière croissante.

Dans un déclencheur selon un mode de réalisation de l'invention, la période d'un signal de phase est déterminée en détectant le temps écoulé entre les instants t1 et t3 (t3-t1), et un signal de déphasage $S(\varphi)$ est déterminé en faisant le rapport d'un temps écoulé entre les instants t1 et t2 (t2-t1) et la période (t3-t1). Le signal de déphasage $S(\varphi)$ peut être représenté par une équation 6 suivante :

$$S(\varphi) = (t3 - t1) / (t2 - t1) \qquad (6)$$

Dans ce cas, le signal $S(\varphi)$ peut prendre une valeur entre 0 et 1 représentative d'un déphasage entre 0 et 360 en degrés ou entre 0 et $2\pi$ en Radians.

Pour améliorer les performances du déclencheur le dispositif de reconstitution peut fonctionner de différentes manières en fonction du courant des capteurs. Par exemple, la reconstitution d'une manière classique jusqu'à un premier niveau de courant dans les capteurs peut fonctionner selon un mode de réalisation de l'invention entre le premier niveau de courant et un second niveau de courant, puis fonctionner en déclenchement instantané sans reconstitution lorsque le courant dépasse le second niveau de courant ou un seuil de déclenchement instantané.

Un déclencheur selon un mode de réalisation de l'invention peut fonctionner selon des zones illustrées sur la courbe de déclenchement représentée sur la figure 4. Par exemple, dans une première zone 22 inférieure à un premier seuil S1 le déclencheur fonctionne selon un premier mode de reconstitution.

Dans une seconde zone 23 supérieure au premier seuil et inférieure à un second seuil S2, le déclencheur fonctionne selon un mode de reconstitution tel que décrit dans la figure 2 et au-dessus du seuil S2 le déclencheur fonctionne sans reconstitution dans une zone 24. Par exemple, le premier seuil S1 peut être de l'ordre de cinq fois un courant nominal In du déclencheur et le second seuil S2 peut être de dix fois le courant nominal In.

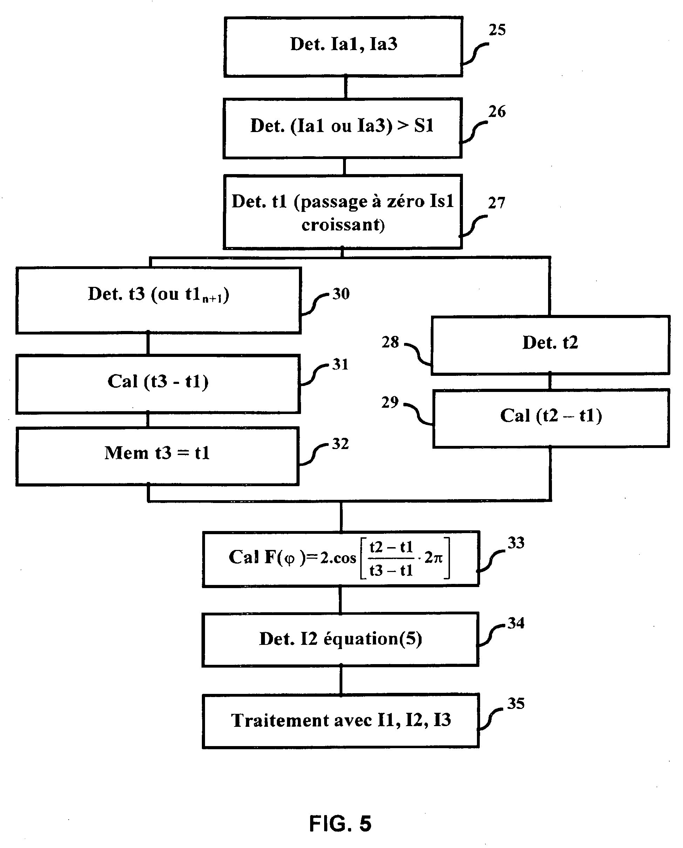

La figure 5 montre un organigramme de fonctionnement d'un déclencheur à reconstitution de phase selon un mode de réalisation de l'invention.

Dans une étape 25, le déclencheur détermine les amplitudes Ia1 et Ia3 des courants mesurés. Puis, à une étape 26, les courants mesurés sont comparés à un seuil S1 pour déterminer le mode de reconstitution. Si le seuil S1 est dépassé, la reconstitution est effectuée selon un mode de reconstitution qui utilise les amplitudes des courants mesurés.

Le passage à zéro du courant Is1 croissant est détecté à un instant t1 pendant une étape 27. Ensuite, le passage à zéro à la croissance du signal de courant Is2 est détecté à un instant t2 pendant une étape 28. Lors d'une étape 29, la durée t2-t1 est calculée pour déterminer le déphasage.

A une étape 30, un nouveau passage à zéro croissant du signal Is1 est détecté à un instant t3. Cet instant t3 peut aussi être considéré comme un nouvel instant t1(n+1) pour le calcul d'un déphasage à un cycle suivant.

Le calcul de la période du signal Is1 (t3-t1) est effectuée à une étape 31. Une étape 32 permet de mémoriser l'instant t3 comme un instant t1 utilisé dans le calcul du cycle suivant.

Lors d'une étape 33, un signal $F(\varphi)$ représentatif du déphasage est calculé. Puis, à une étape 34 un signal I2 reconstitué est calculé par exemple, selon un calcul représenté par l'équation (5).

Les fonctions de déclenchement sont traitées à une étape 35 en utilisant les signaux de courant I1, I2 et I3.

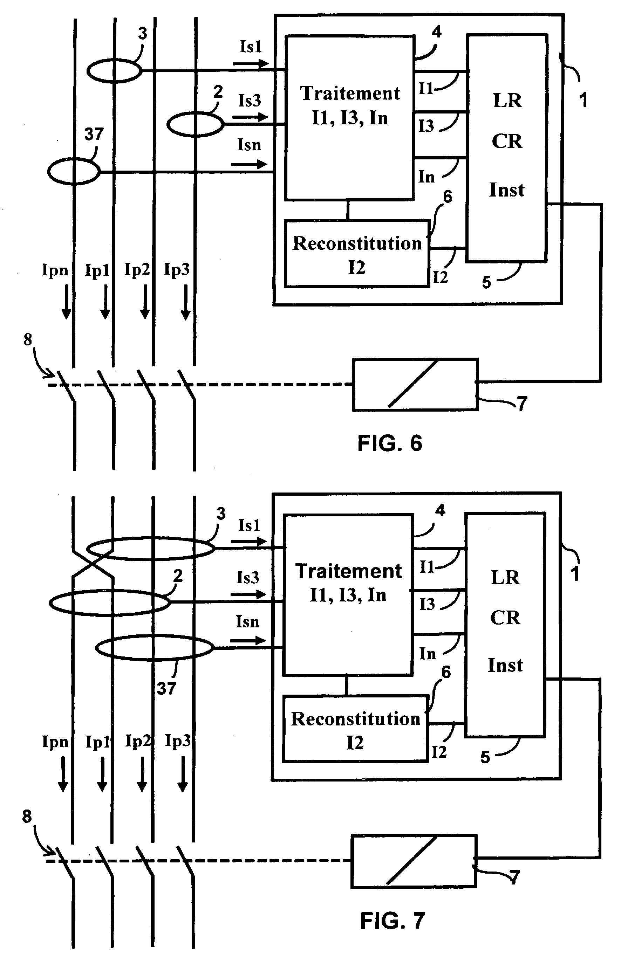

Les figures 6 et 7 montrent d'autres modes de réalisation d'un déclencheur selon l'invention pour un disjoncteur comportant quatre pôles. Dans ces figures, les quatre pôles sont par exemple les trois phases et le neutre. Ainsi, sur les figures 6 et 7, un capteur de courant 37 fournit au circuit de traitement 4 un signal Isn représentatif d'un courant primaire de neutre Ipn. Dans ce cas, le circuit de reconstitution 6 reçoit aussi un signal représentatif du signal Isn et le circuit de traitement 5 reçoit un signal In représentatif du courant de neutre traité par le circuit 4.

Dans ces modes de réalisation, le circuit de reconstitution 6 fournit un signal reconstitué I2 en fonction des signaux Is1, Is3 et Isn. De préférence, le circuit 6 reconstitue la valeur du signal I2 en deux temps.

Dans un premier temps, une valeur intermédiaire I0 est déterminée en fonction des signaux d'amplitude Ia1 et Ia3 et d'un signal de déphasage $\varphi3$, $\cos(\varphi3)$, ou $F(\varphi3)$ entre les signaux Is1 et Is3. Par exemple, un signal d'amplitude Ia0 du signal intermédiaire I0 est déterminé de préférence comme l'équation (4).

Une équation (7) représente le signal Ia0 de l'amplitude du signal intermédiaire reconstitué.

$$Ia0 = \sqrt{Ia1^2 + Ia3^2 + 2 * Ia1 * Ia3 * \cos(\varphi3)} \qquad (7)$$

Un déphasage $\varphi0$ du signal Ia0 peut être déterminé selon des équations 8, 9 ou 10.

$$\varphi 0 = \arctan\left( \frac{IP3 \cdot \sin(\varphi)}{IP3 \cdot \cos(\varphi) + IP1} \right) \qquad (8)$$

$$\varphi 0 = \arcsin\left( \frac{IP3 \cdot \sin(\varphi)}{IP0} \right) \qquad (9)$$

$$\varphi 0 = \arccos\left( \frac{IP3 \cdot \cos(\varphi) + IP1}{IP0} \right) \qquad (10)$$

Dans un second temps, une valeur Ia2 d'amplitude et/ou une valeur I2 efficace du signal de phase reconstitué est déterminée en fonction du signal d'amplitude Ia0 intermédiaire dépendant de Ia1, Ia3 et d'un signal Ian de neutre représentatif de l'amplitude du signal Isn et d'un signal de déphasage $\varphi 0 \cos(\varphi 0)$, ou $F(\varphi 0)$ entre les signaux Is0 et Isn. La détermination du signal I2 ou Ia2 est faite de préférence selon la même méthode que celle définie dans les équations 3, 4, 5 et 7. Ainsi, même dans un mode de réalisation pour un disjoncteur à quatre pôles, la valeur de I2 est reconstituée en fonction des amplitudes de Is1 et Is3 donnant I0 et d'un déphasage $\varphi 0$ dépendant du déphasage entre les signaux Is1 et Is3, le signal Isn intervenant dans une étape supplémentaire.

L'ensemble des circuits et des modules décrits dans les modes de réalisation ci-dessus peut être groupé sur un même circuit et être intégré dans un disjoncteur.

Ces circuits peuvent être réalisés sous des formes analogiques et/ou numériques.

L'ensemble des fonctions peut être réalisé de manière câblée ou programmée dans un microprocesseur ou un microcontrôleur.

Les capteurs 2 et 3 peuvent entourer chacun un ou deux conducteurs pour la mesure de courant primaire. Lorsque les capteurs entourent deux conducteurs, l'alimentation du déclencheur par les capteurs de courant peut être assurée dans tous les cas de configuration.

Le déclencheur peut être alimenté par les capteurs de courants 2 et 3 par une alimentation auxiliaire et/ou par un capteur de courant homopolaire.

D'autres fonctions utilisant des signaux de courant reconstitués peuvent être associées au déclencheur.

Ces fonctions peuvent être, par exemple, l'affichage de valeur de courants ou des fonctions de communication.

Le déclencheur décrit ci-dessus est de préférence intégré à un disjoncteur triphasé mais il pourrait aussi être réalisé de manière indépendante et fonctionner comme un relais de protection.

**Revendications**

1. Déclencheur à reconstitution de phase comportant :

   - au moins deux capteurs (2, 3) disposés sur des conducteurs principaux (36) à protéger, et
   - une unité de traitement (1) comportant des moyens de traitement (4) des signaux de courant connectés aux capteurs, des moyens (6) de reconstitution de phase recevant des signaux (Is1, Is3) représentatifs des signaux de courant fournis par les capteurs, et des moyens (5) de traitement de fonction de déclenchement connectés aux moyens de traitement des signaux de courant et aux moyens de reconstitution,
   déclencheur **caractérisé en ce que** les moyens de reconstitution de phase comportent :
   - des premiers moyens (11, 12, 25) de détermination pour déterminer des signaux (Ia1, Ia3) représentatifs des amplitudes des signaux de courant (Is1, Is3) fournis par les deux capteurs,
   - des seconds moyens (15, 27-33) de détermination pour déterminer un signal ($F(\varphi)$, $S(\varphi)$, $\cos(\varphi)$, ($\varphi$), ($\varphi 0$)) représentatif d'un déphasage entre des signaux représentatif des signaux (Is1, Is3) fournis par les deux capteurs, et
   - des troisièmes moyens (13, 14, 16, 17, 34) de détermination connectés aux premiers et seconds moyens de détermination pour déterminer un signal ($Ia2^2$, Ia2, I2) représentatif d'un courant de phase reconstitué en fonction des signaux représentatifs des amplitudes et du signal représentatif d'un déphasage des signaux fournis par les deux capteurs.

**2.** Déclencheur selon la revendication 1, **caractérisé en ce que** les seconds moyens de détermination comportent des moyens (15, 33) pour calculer le cosinus du déphasage entre les signaux représentatifs des signaux (Is1, Is3) fournis par les deux capteurs.

**3.** Déclencheur selon l'une des revendications 1 ou 2, **caractérisé en ce que** les seconds moyens de détermination comportent des moyens pour déterminer des instants de passages à zéro dans un sens prédéterminé des signaux fournis par les capteurs de courant, lesdits instants étant un premier instant (t1) de passage à zéro d'un premier signal (Is1), un second instant (t2) de passage à zéro d'un second signal (Is3) et un troisième instant (t3) de passage à zéro successif du premier signal (Is1), un signal représentatif du déphasage étant proportionnel au rapport d'un temps (t2-t1) entre les premier (t1) et second (t2) instants sur un temps (t3-t1) entre les premier (t1) et troisième (t3) instants correspondant à la période du premier signal.

**4.** Déclencheur selon l'une quelconque des revendications 1 à 3. **caractérisé en ce que** les troisièmes moyens de détermination comportent des premiers moyens de calcul (16) d'un signal (P) de produit pour calculer le produit des signaux représentatifs des amplitudes et du signal représentatif d'un déphasage.

**5.** Déclencheur selon la revendication 4, **caractérisé en ce que** les troisièmes moyens de détermination comportent des seconds moyens de calcul (17) d'un signal ($Ia2^2$) de somme pour calculer la somme des signaux d'amplitude élevés au carré ($Ia1^2$, $Ia3^2$) et du signal de produit (P).

**6.** Déclencheur selon l'une quelconque des revendications 1 à 5, **caractérisé en ce qu'**il comporte des moyens (20) de détermination de courant homopolaire comportant un capteur de courant (21) disposé sur l'ensemble des conducteurs principaux.

**7.** Déclencheur selon l'une quelconque des revendications 1 à 6, **caractérisé en ce que** les moyens de reconstitution utilisent le signal fourni par les troisièmes moyens de détermination lorsqu'au moins un des signaux de courant (Is1, Is3) fournis par les deux capteurs dépasse un premier seuil (S1) prédéterminé.

**8.** Déclencheur selon l'une quelconque des revendications 1 à 7, **caractérisé en ce que** chaque capteur (2, 3) de courant entoure deux conducteurs principaux.

**9.** Déclencheur selon l'une quelconque des revendications 1 à 8, **caractérisé en ce qu'**il comporte au moins trois capteurs (2, 3, 37) disposés sur des conducteurs principaux (36) à protéger, les premiers moyens (11, 12, 25) de détermination déterminant des signaux (Ia1, Ia3) représentatifs des amplitudes des signaux de courant (Is1, Is3) fournis par les capteurs, et les troisièmes moyens (13, 14, 16, 17, 34) de détermination connectés aux premiers et seconds moyens de détermination déterminant un signal ($Ia2^2$, Ia2, I2) représentatif d'un courant de phase reconstitué en fonction des signaux représentatifs des amplitudes (Ia1, Ia3), du signal représentatif d'un déphasage ($\varphi$, $\varphi$0) des signaux fournis par deux capteurs (2, 3), et d'un signal (Isn) fourni par un troisième capteur (36).

**10.** Disjoncteur comportant au moins trois contacts (8) connectés en série avec des conducteurs principaux (36) **caractérisé en ce qu'**il comporte un déclencheur selon l'une quelconque des revendications 1 à 9.

**Patentansprüche**

**1.** Auslöser mit Phasenwiederherstellung, umfassend:

- mindestens zwei Sensoren (2, 3), die auf zu schützenden Hauptleitern (36) angeordnet sind, und
- eine Bearbeitungseinheit (1), umfassend Bearbeitungsmittel (4) der Stromsignale, die an die Sensoren angeschlossen sind, Mittel (6) zur Phasenwiederherstellung, die Signale (Is1, Is3) empfangen, die für die von den Sensoren gelieferten Stromsignale repräsentativ sind, und Bearbeitungsmittel (5) einer Auslösefunktion, die an die Bearbeitungsmittel der Stromsignale und die Wiederherstellungsmittel angeschlossen sind, wobei der Auslöser **dadurch gekennzeichnet ist, dass** die Mittel zur Phasenwiederherstellung umfassen:
- erste Bestimmungsmittel (11, 12, 25), um Signale (Ia1, Ia3) zu bestimmen, die für die Amplituden der von den beiden Sensoren gelieferten Stromsignale (Is1, Is3) repräsentativ sind,
- zweite Bestimmungsmittel (15, 27-33), um ein Signal ($F(\Phi)$, $S(\Phi)$, $\cos(\Phi)$, $(\Phi)$, $(\Phi0)$) zu bestimmen, das für eine Phasenverschiebung zwischen Signalen repräsentativ ist, die für von den beiden Sensoren gelieferte Signale (Is1, Is3) repräsentativ sind, und

- dritte Bestimmungsmittel (13, 14, 16, 17, 34), die an die ersten und zweiten Bestimmungsmittel angeschlossen sind, um ein Signal (Ia2$^2$, Ia2, 12) zu bestimmen, das für einen Strom einer wiederhergestellten Phase in Abhängigkeit von den für die Amplituden repräsentativen Signalen und dem für eine Phasenverschiebung der von den beiden Sensoren gelieferten Signale repräsentativen Signal repräsentativ ist.

2. Auslöser nach Anspruch 1, **dadurch gekennzeichnet, dass** die zweiten Bestimmungsmittel Mittel (15, 33) umfassen, um den Cosinus der Phasenverschiebung zwischen den Signalen, die für die von den beiden Sensoren gelieferten Signale (Is1, Is3) repräsentativ sind, zu berechnen.

3. Auslöser nach einem der Ansprüche 1 oder 2, **dadurch gekennzeichnet, dass** die zweiten Bestimmungsmittel Mittel umfassen, um Zeitpunkte des Nulldurchgangs der von den Stromsensoren gelieferten Signale in einer vorbestimmten Richtung zu bestimmen, wobei die Zeitpunkte ein erster Nulldurchgangszeitpunkt (t1) eines ersten Signals (Is1), ein zweiter Nulldurchgangszeitpunkt (t2) eines zweiten Signals (Is3) und ein nachfolgender dritter Nulldurchgangszeitpunkt (t3) des ersten Signals (Is1) sind, wobei ein für die Phasenverschiebung repräsentatives Signal proportional zum Verhältnis einer Zeit (t2-t1) zwischen den ersten (t1) und zweiten (t2) Zeitpunkten zu einer Zeit (t3-t1) zwischen den ersten (t1) und dritten (t3) Zeitpunkten entsprechend der Periode des ersten Signals ist.

4. Auslöser nach einem der Ansprüche 1 bis 3, **dadurch gekennzeichnet, dass** die dritten Bestimmungsmittel erste Mittel (16) zur Berechnung eines Produktsignals (P) umfassen, um das Produkt der für die Amplituden repräsentativen Signale und des für die Phasenverschiebung repräsentativen Signals zu berechnen.

5. Auslöser nach Anspruch 4, **dadurch gekennzeichnet, dass** die dritten Bestimmungsmittel zwei Mittel (17) zur Berechnung eines Summensignals (Ia2$^2$) umfassen, um die Summe der Amplitudensignale zum Quadrat (Ia1$^2$, Ia3$^2$) und des Produktsignals (P) zu berechnen.

6. Auslöser nach einem der Ansprüche 1 bis 5, **dadurch gekennzeichnet, dass** er Bestimmungsmittel (20) eines homopolaren Stroms umfasst, die einen Stromsensor (21), der auf der Gesamtheit der Hauptleiter angeordnet ist, umfassten.

7. Auslöser nach einem der Ansprüche 1 bis 6, **dadurch gekennzeichnet, dass** die Wiederherstellungsmittel das von den dritten Bestimmungsmitteln gelieferte Signal verwenden, wenn mindestens eines der von den beiden Sensoren gelieferten Stromsignale (Is1, Is3) eine erste vorbestimmte Schwelle (S1) überschreitet.

8. Auslöser nach einem der Ansprüche 1 bis 7, **dadurch gekennzeichnet, dass** jeder Stromsensor (2, 3) zwei Hauptleiter umgibt.

9. Auslöser nach einem der Ansprüche 1 bis 8, **dadurch gekennzeichnet, dass** er mindestens drei Sensoren (2, 3, 37) umfasst, die auf zu schützenden Hauptleitern (36) angeordnet sind, wobei die ersten Bestimmungsmittel (11, 12, 25) Signale (Ia1, Ia3) bestimmen, die für die Amplituden der von den Sensoren gelieferten Stromsignale (Is1, Is3) repräsentativ sind, und wobei die dritten Bestimmungsmittel (13, 14, 16, 17, 34), die an die ersten und zweiten Bestimmungsmittel angeschlossen sind, ein Signal (Ia2$^2$, Ia2, 12) bestimmen, das für einen Strom einer wiederhergestellten Phase in Abhängigkeit von den für die Amplituden repräsentativen Signalen (Ia1, Ia3), dem für eine Phasenverschiebung der von den beiden Sensoren (2, 3) gelieferten Signale ($\Phi$, $\Phi$0) repräsentativen Signal und einem von einem dritten Sensor (36) gelieferten Signal (Isn) repräsentativ ist.

10. Schutzschalter, umfassend mindestens drei Kontakte (8), die in Serie mit Hauptleitern (36) geschaltet sind, **dadurch gekennzeichnet, dass** er einen Auslöser nach einem der Ansprüche 1 bis 9 umfasst.

**Claims**

1. Tripping device with phase reconstruction comprising:

   - at least two sensors (2, 3) disposed on main conductors (36) to be protected, and
   - a processing unit (1) comprising means (4) for processing the current signals connected to the sensors, phase reconstruction means (6) receiving signals (Is1, Is3) representative of the current signals provided by the sensors, and comprising triggering function processing means (5) connected to the means for processing the current signals and to the reconstruction means,

tripping device **characterized in that** the phase reconstruction means comprise:
- first means (11, 12, 25) of determination for determining signals (Ia1, Ia3) representative of the amplitudes of the current signals (Is1, Is3) provided by the two sensors,
- second means (15, 27-33) of determination for determining a signal (F($\phi$), S($\phi$), cos($\phi$), ($\phi$), ($\phi$0)) representative of a phase shift between signals representative of the signals (Is1, Is3) provided by the two sensors, and
- third means (13, 14, 16, 17, 34) of determination connected to the first and second means of determination for determining a signal (Ia2$^2$, Ia2, 12) representative of a phase current reconstructed as a function of the signals representative of the amplitudes and of the signal representative of a phase shift of the signals provided by the two sensors.

2. Tripping device according to Claim 1, **characterized in that** the second means of determination comprise means (15, 33) for calculating the cosine of the phase shift between the signals representative of the signals (Is1, Is3) provided by the two sensors.

3. Tripping device according to one of Claims 1 or 2, **characterized in that** the second means of determination comprise means for determining instants of zero-crossings in a predetermined direction of the signals provided by the current sensors, the said instants being a first instant (t1) of zero-crossing of a first signal (Is1), a second instant (t2) of zero-crossing of a second signal (Is3) and a successive third instant (t3) of zero-crossing of the first signal (Is1), a signal representative of the phase shift being proportional to the ratio of a time (t2-t1) between the first (t1) and second (t2) instants over a time (t3-t1) between the first (t1) and third (t3) instants corresponding to the period of the first signal.

4. Tripping device according to any one of Claims 1 to 3, **characterized in that** the third means of determination comprise first means of calculation (16) of a product signal (P) for calculating the product of the signals representative of the amplitudes and of the signal representative of a phase shift.

5. Tripping device according to Claim 4, **characterized in that** the third means of determination comprise second means of calculation (17) of a sum signal (Ia2$^2$) for calculating the sum of the amplitude signals squared (Ia1$^2$, Ia3$^2$) and of the product signal (P).

6. Tripping device according to any one of Claims 1 to 5, **characterized in that** it comprises means (20) of determination of homopolar current comprising a current sensor (21) disposed on the set of main conductors.

7. Tripping device according to any one of Claims 1 to 6, **characterized in that** the reconstruction means use the signal provided by the third means of determination when at least one of the current signals (Is1, Is3) provided by the two sensors exceeds a first predetermined threshold (S1).

8. Tripping device according to any one of Claims 1 to 7, **characterized in that** each current sensor (2, 3) surrounds two main conductors.

9. Tripping device according to any one of Claims 1 to 8, **characterized in that** it comprises at least three sensors (2, 3, 37) disposed on main conductors (36) to be protected, the first means (11, 12, 25) of determination determining signals (Ia1, Ia3) representative of the amplitudes of the current signals (Is1, Is3) provided by the sensors, and the third means (13, 14, 16, 17, 34) of determination connected to the first and second means of determination determining a signal (Ia2$^2$, Ia2, 12) representative of a phase current reconstructed as a function of the signals representative of the amplitudes (Ia1, Ia3), of the signal representative of a phase shift ($\phi$, $\phi$0) of the signals provided by two sensors (2, 3), and of a signal (Isn) provided by a third sensor (36).

10. Circuit breaker comprising at least three contacts (8) connected in series with main conductors (36), **characterized in that** it comprises a tripping device according to any one of Claims 1 to 9.

**FIG. 1 Art antérieur**

FIG. 2

FIG. 3

FIG. 4

FIG. 5

**FIG. 6**

**FIG. 7**

**EP 1 045 500 B1**

**Documents brevets cités dans la description**

- US 5777835 A

- US 5815357 A